# EUROPEAN PATENT SPECIFICATION

(11) **EP 3 078 988 B1**
(45) Date of publication and mention of the grant of the patent: **05.06.2019**
(21) Application number: 16164745.8
(22) Date of filing: 11.04.2016
(51) Int. Cl.: G01S 17/93, G01S 17/89, G01S 17/87, G01S 17/02, G01S 7/48, G01S 7/481

(54) **FLIGHT CONTROL SYSTEM WITH DUAL REDUNDANT LIDAR**
FLUGSTEUERUNGSSYSTEM MIT DOPPELT REDUNDANTEM LIDAR
SYSTÈME DE COMMANDE DE VOL À DOUBLE LIDAR REDONDANT

(30) Priority: 09.04.2015 US 201514682785
(43) Date of publication of application: 12.10.2016
(73) Proprietor: Goodrich Corporation, Charlotte, NC 28217-4578 (US)
(72) Inventor: HUMPHREY, Ian P., Foxboro, Massachusetts 02035 (US)
(74) Representative: Dehns

(56) References cited:
- US-A1- 2004 036 630
- US-A1- 2010 253 567
- US-A1- 2011 285 981
- US-A1- 2012 032 030
- ALEKSANDR KUSHLEYEV ET AL: "Planning for landing site selection in the aerial supply delivery", INTELLIGENT ROBOTS AND SYSTEMS (IROS), 2011 IEEE/RSJ INTERNATIONAL CONFERENCE ON, IEEE, 25 September 2011 (2011-09-25), pages 1146-1153, XP032060495, DOI: 10.1109/IROS.2011.6048513 ISBN: 978-1-61284-454-1
- VADLAMANI A K ET AL: "Dual Airborne Laser Scanners Aided Inertial for Improved Autonomous Navigation", IEEE TRANSACTIONS ON AEROSPACE AND ELECTRONIC SYSTEMS, IEEE SERVICE CENTER, PISCATAWAY, NJ, US, vol. 45, no. 4, 1 October 2009 (2009-10-01), pages 1483-1498, XP011297118, ISSN: 0018-9251

## Description

### BACKGROUND OF THE INVENTION

### 1. Field of the Invention

The present disclosure relates to laser imaging systems, and more particularly to the use of laser imaging systems within a flight control system.

### 2. Description of Related Art

Unmanned aerial vehicles (UAVs) are remotely piloted or autonomous aircrafts that can carry cameras, sensors, communications equipment, or other payloads. UAVs have proven their usefulness in military applications in recent years. Large UAVs have executed surveillance and tactical missions in virtually every part of the world. Smaller UAVs have been used all over the world as a short-range video reconnaissance platform. In addition to military applications, there are many civilian applications, including government applications, such as firefighting and law enforcement. In the private sector, there also exists a range of surveillance applications for UAVs, for example, for use by the media and agriculture.

The potential for collisions is considerable in the context of UAVs. Typically, a remotely located operator manages and controls the UAV from a ground control station. Although the ground control station enables some degree of controlled flight, generally, UAVs need the ability scout out their surrounding airspace and watch for incoming obstacles and locate/identify potential landing surfaces.

Such conventional methods and systems have generally been considered satisfactory for their intended purpose. However, there is still a need in the art for improved flight systems for unmanned aerial vehicles. The present disclosure provides a solution for this need. US 2011/285981A1 describes a sensor element and system comprising a wide field-of-view 3D imaging LIDAR.

### SUMMARY OF THE INVENTION

In accordance with the present invention, respective sensor system and method, as set forth in the independent claims are provided. Embodiments of the invention are claimed in the dependent claims.

A flight control system includes a first sensor assembly and a second sensor assembly with substantially redundant sensor capabilities as the first sensor assembly. A flight control system is operatively connected to the first and second sensor assemblies to control each assembly individually.

Sensors of the first and second assemblies include LIDAR sensors. The first and second sensor assemblies can be each mounted in a respective gimbal such that the first and second sensors rotate varying degrees to obtain a desired field of view.

The flight control system can be configured to direct the first and second sensors to overlapping fields of view. Alternatively, the flight control system can be configured to direct the first and second sensors to non-overlapping fields of view. The flight control system can be configured to continuously operate the first and second sensors in an "on" mode with one of the first and second sensors selectively toggling between an "on/off" mode.

A processor having a memory is operatively connected to the first and second sensor assemblies, wherein the memory includes instructions recorded thereon that, when read by the processor, cause the processor to detect objects in front of the aircraft during forward flight. The memory may further include instructions recorded thereon that, when read by the processor, cause the processor to identify a suitable landing area. The first and second sensor assemblies also include independent polarization channels, and the memory, when ready by the processor, may cause the processor to indicate material of an object or surface detected by the first and second sensors based on polarization detected with respective polarization channels.

A method for providing dual redundancy for a flight system includes observing a first field of view of a first sensor assembly and observing a second field of view of a second sensor assembly. The first and second sensor assemblies are controlled individually.

The method can further include rotating each of the sensor assemblies such that the fields of view are overlapping. In certain circumstances, the sensor assemblies can be rotated such that the fields of view are separate and distinct. The method can further include detecting objects in front of the aircraft to avoid collisions and identify a suitable landing area.

These and other features of the systems and methods of the subject disclosure will become more readily apparent to those skilled in the art from the following detailed description of the preferred embodiments taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, preferred embodiments thereof will be described in detail herein below with reference to certain figures, wherein:
Fig. 1 is a schematic view of an exemplary embodiment of a flight system constructed in accordance with the present disclosure, showing dual LIDAR systems; and
Fig. 2 is a block diagram of the system of Fig. 1, showing the LIDAR systems coupled to a processor and memory.

### DETAILED DESCRIPTION OF THE PREFERRED EMBODIMENTS

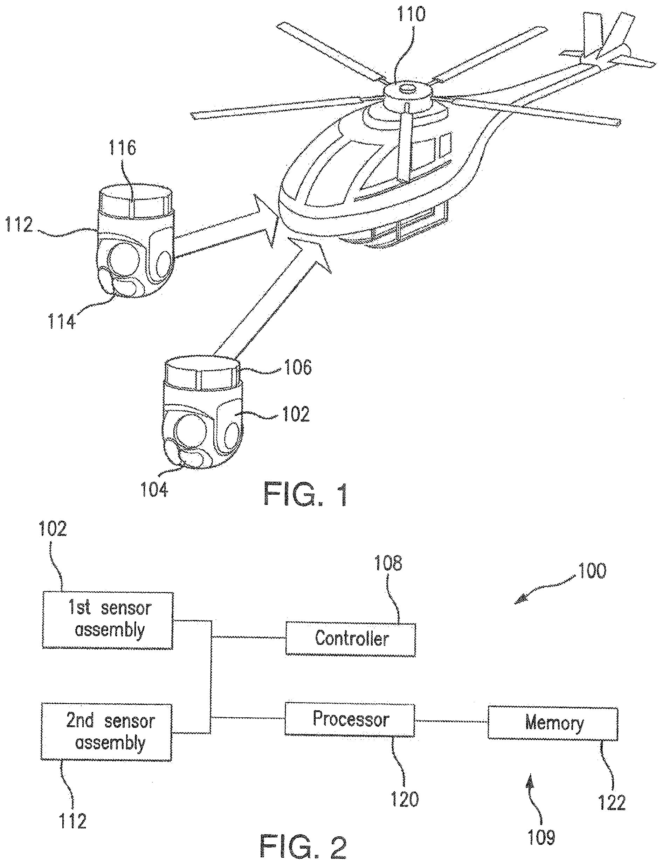

Reference will now be made to the drawings wherein like reference numerals identify similar structural features or aspects of the subject disclosure. For purposes of explanation and illustration, and not limitation, a partial view of an exemplary embodiment of a sensor system in accordance with the disclosure is shown in Fig. 1 and is designated generally by reference character 100. Other embodiments of the system and method in accordance with the disclosure, or aspects thereof, are provided in Figs. 2-3, as will be described.

With reference to Figs. 1 and 2, a schematic illustration of the sensor system 100 of the present disclosure is shown. The sensor system includes dual redundant sensor assemblies 102, 112 for altitude and range measurements, terrain mapping and obstacle avoidance. The sensor assemblies 102, 112 include a first sensor assembly 102 operatively coupled to a forward sector of an aircraft 110 and a second sensor assembly 112 operatively coupled to the aircraft a distance away from the first sensor assembly 102. The second sensor assembly 112 includes substantially redundant sensor capabilities as with the first sensor assembly 102. As shown in Fig. 1, the sensor assemblies 102, 112 are shown both at the forward sector, linearly spaced apart from one another, however other configurations are contemplated without distracting from the scope of the present disclosure. Each sensor assembly 102, 112 includes a sensor 104, 114 mounted within a gimbal 106, 116 to allow complete rotation of each sensor 104, 114. The sensors 104, 114 are preferably LIDAR sensors that can contain EO/IR capabilities measuring distance to an object or surface by illuminating the object/surface with a laser and analyzing the reflected light.

The first and second sensor assemblies 102, 112 provide dual redundancy and an increased field of view to the aircraft. Specifically, the sensor assemblies 102, 112 are operatively connected to a flight system 109 including a processor 120 and memory 112 located either on the aircraft 110 or remotely. The memory includes instructions which when read by the processor cause the processor to detect objects in front of the aircraft and identify a suitable landing area. Particularly useful in unmanned aerial vehicles (UAVs), (and alternatively unmanned surface vehicles, on land or on water) the first and second sensor assemblies 102, 112 are individually controlled by a controller 108 such that the fields of view of the sensors 104, 114 may or may not overlap. For example, prior to landing or docking, the first sensor assembly 102 can be positioned to look forward ahead of the aircraft 110 to view where the aircraft 110 is going. The second sensor assembly 112 can be positioned to view the ground or surface below the aircraft/vehicle 110 to identify a suitable landing area. When a landing area is identified and the aircraft 110 begins to descend and/or hover over the landing area the first sensor assembly 102 can rotate to view the landing surface. The dual redundancy of the two sensor assemblies 102, 112 also increases field of view within a degraded environment when both assemblies have overlapping fields of view. Moreover, each of the sensor assemblies 102, 112 can have polarization channels independent of each other to distinguish between natural material and manmade material when viewing an object or surface. The controller 108 can operate one or both of the sensor assemblies 102, 112 either continuously or intermittently, as needed. More specifically, for example, the first sensor assembly can continuously operate in an "on" mode while the second sensor assembly operates in an "on/off" mode and vice versa. Furthermore, the dual redundancy also provides for a backup if one of the sensor assemblies 102, 112 fails. For example, if the first sensor assembly 102 fails, the second sensor assembly 112 will continue running if the second sensor assembly 112 was in the "on" mode or may be switched to the "on" mode to provide substantially the same operations as the first sensor assembly 102.

A method of using the system of Figs. 1 and 2 includes observing a first field of view of a first sensor assembly, e.g., first sensor assembly 102, and observing a second field of view of a second sensor assembly, e.g., second sensor assembly 112. The method can further include rotating each of the sensor assemblies such that the fields of view are overlapping. In certain circumstances, the sensor assemblies can be rotated such that the fields of view are separate and distinct. The method can further include detecting objects in front of the aircraft to avoid collisions and identifying a suitable landing area.

The methods and systems of the present disclosure, as described above and shown in the drawings, provide for a flight with superior properties including dual redundancy using LIDAR sensors. While the apparatus and methods of the subject disclosure have been shown and described with reference to preferred embodiments, those skilled in the art will readily appreciate that changes and/or modifications may be made thereto without departing from the subject disclosure.

## Claims

1. A sensor system (100), comprising:
a first sensor assembly (102) comprising a first LIDAR sensor;
a second sensor assembly (112) comprising a second LIDAR sensor with substantially redundant sensor capabilities with the first sensor assembly (102); and
a flight control system (109) operatively connected to control the first and second sensor assemblies (102,112) individually; and further comprising a processor (120) having a memory (122) operatively connected to the first and second sensor assemblies (102,112), wherein the memory (122) includes instructions recorded thereon that, when read by the processor (120), cause the processor (120) to:
detect objects in front of an aircraft; and **characterized by** each of the first and second sensor assemblies (102,112) including independent polarization channels.

2. The sensor system of claim 1, wherein sensors (104,114) of each of the first and second LIDAR sensors contain EO/IR imaging sensors.

3. The sensor system of claim 1 or 2, wherein the first and second sensor assemblies (102,112) are each mounted in a respective gimbal (106,116) such that first and second sensors (104,114) of each sensor assembly (102,112) can rotate varying degrees to obtain a desired field of view.

4. The sensor system of claim 3, wherein the flight control system (109) is configured to direct first and second sensors (104,114) to overlapping fields of view.

5. The sensor system of claim 3 or 4, wherein the flight control system (109) is configured to direct first and second sensors (104,114) to non-overlapping fields of view.

6. The sensor system of any preceding claim, wherein the flight control system (109) is configured to direct one of the first and second sensor assemblies (102,112) to continuously operate in an "on" mode with the other of the first and second sensor assemblies (102, 112) to selectively toggle between an "on" and an "off" mode.

7. The sensor system of claim 1, wherein the memory (122) includes instructions recorded thereon that, when read by the processor (120), cause the processor to:
identify a suitable landing area.

8. The sensor system of any of claims 1 to 6, wherein the memory (122) includes instructions recorded thereon that, when ready by the processor (120), cause the processor to:
indicate material of an object or surface detected by the first and second sensor
assemblies (102,112) based on polarization of the reflective light detected with the respective polarization channels.

9. A method of providing dual redundancy for a flight control system (109):
observing a first field of view of a first sensor assembly (102) comprising a first LIDAR sensor and operatively coupled to a forward sector of an aircraft (110);
observing a second field of view of a second sensor assembly (112) comprising a second LIDAR sensor and operatively coupled to the aircraft (110) positioned a distance from the first sensor assembly (102), the second sensor assembly (112) with substantially redundant capabilities with the first sensor assembly (102); and
controlling the first and second sensor assemblies (102,112) individually with a flight control system (109); and
providing a processor (120) having a memory operatively connected to the first and second sensor assemblies (102,112), wherein the memory (122) includes instructions recorded thereon that, when read by the processor (120), cause the processor (120) to:
detect objects in front of the aircraft;
and **characterized by** each of the first and second sensor assemblies (102,112) including independent polarization channels

10. The method of claim 9, further comprising rotating each of the first and second sensor assemblies about a gimbal axis mounted to the aircraft (110) such that the first and second field of views overlap.

11. The method of claim 9 or 10, further comprising rotating each of the first and second sensor assemblies such that the first and second fields are separate and distinct.

12. The method of any of claims 9 to 11, wherein of each of the first and second LIDAR sensors contain EO/IR imaging sensors.

13. The method of any of claims 9 to 12, further comprising detecting objects in front of the aircraft (110) to avoid collisions.

14. The method of any of claims 9 to 13, further comprising identifying a suitable landing area.

15. The method of any of claims 9 to 13, wherein the memory (122) includes instructions recorded thereon that, when ready by the processor (120), cause the processor to:
indicate material of an object or surface detected by the first and second sensor
assemblies (102,112) based on
polarization of the reflective light detected with the respective polarization channels.

## Patentansprüche

1. Sensorsystem (100), umfassend:
eine erste Sensoranordnung (102), die einen ersten LIDAR-Sensor umfasst;
eine zweite Sensoranordnung (112), die einen zweiten LIDAR-Sensor mit im Wesentlichen redundanten Sensorfähigkeiten mit der ersten Sensoranordnung (102) umfasst; und
ein Flugsteuerungssystem (109), das wirkverbunden ist, um die erste und die zweite Sensoranordnung (102, 112) einzeln zu steuern;
und weiter umfassend einen Prozessor (120), der einen Speicher (122) aufweist, der mit der ersten und der zweiten Sensoranordnung (102, 112) wirkverbunden ist, wobei der Speicher (122) Anweisungen umfasst, die auf diesem gespeichert sind und die, wenn sie vom Prozessor (120) gelesen werden, den Prozessor (120) veranlassen:
Objekte vor einem Luftfahrzeug zu erkennen; und **dadurch gekennzeichnet, dass** jede aus der ersten und der zweiten Sensoranordnung (102, 112) unabhängige Polarisationskanäle umfasst.

2. Sensorsystem nach Anspruch 1, wobei die Sensoren (104, 114) jeder aus dem ersten und dem zweiten LIDAR-Sensor EO-/IR-Bildsensoren umfassen.

3. Sensorsystem nach Anspruch 1 oder 2, wobei die erste und die zweite Sensoranordnung (102, 112) jeweils in einer entsprechenden kardanischen Aufhängung (106, 116) montiert sind, so dass der erste und der zweite Sensor (104, 114) jeder Sensoranordnung (102, 112) um verschiedene Grade rotieren können, um ein gewünschtes Sichtfeld zu erhalten.

4. Sensorsystem nach Anspruch 3, wobei das Flugsteuerungssystem (109) konfiguriert ist, um den ersten und den zweiten Sensor (104, 114) auf überlappende Sichtfelder auszurichten.

5. Sensorsystem nach Anspruch 3 oder 4, wobei das Flugsteuerungssystem (109) konfiguriert ist, um den ersten und den zweiten Sensor (104, 114) auf nicht überlappende Sichtfelder auszurichten.

6. Sensorsystem nach einem der vorstehenden Ansprüche, wobei das Flugsteuerungssystem (109) konfiguriert ist, um eine aus der ersten und der zweiten Sensoranordnung (102, 112) so auszurichten, dass sie kontinuierlich in einem "An"-Modus arbeitet, wobei die andere aus der ersten und der zweiten Sensoranordnung (102, 112) selektiv zwischen einem "An"- und einem "Aus"-Modus umschaltet.

7. Sensorsystem nach Anspruch 1, wobei der Speicher (122) Anweisungen, die auf diesem gespeichert sind, umfasst, die, wenn sie vom Prozessor (120) gelesen werden, den Prozessor veranlassen:
einen geeigneten Landebereich zu identifizieren.

8. Sensorsystem nach einem der Ansprüche 1 bis 6, wobei der Speicher (122) Anweisungen, die auf diesem gespeichert sind, umfasst, die, wenn sie vom Prozessor (120) gelesen werden, den Prozessor veranlassen:
das Material eines Objekts oder einer Fläche, das oder die von der ersten und der zweiten Sensoranordnung (102, 112) erkannt wurde, basierend auf der Polarisation des reflektierten Lichts, die mit den jeweiligen Polarisationskanälen erkannt wurde, anzugeben.

9. Verfahren zum Bereitstellen einer doppelten Redundanz für ein Flugsteuerungssystem (109):
Beobachten eines ersten Sichtfelds einer ersten Sensoranordnung (102), die einen ersten LIDAR-Sensor umfasst und mit einem Vorwärtssektor eines Luftfahrzeugs (110) wirkverbunden ist;
Beobachten eines zweiten Sichtfelds einer zweiten Sensoranordnung (112), die einen zweiten LIDAR-Sensor umfasst und mit dem Luftfahrzeug (110) wirkverbunden ist und in einem Abstand von der ersten Sensoranordnung (102) angeordnet ist, wobei die zweite Sensoranordnung (112) im Wesentlichen redundante Fähigkeiten mit der ersten Sensoranordnung (102) aufweist; und
Steuern der ersten und der zweiten Sensoranordnung (102, 112) einzeln mit einem Flugsteuerungssystem (109); und
Bereitstellen eines Prozessors (120), der einen Speicher aufweist, der mit der ersten und der zweiten Sensoranordnung (102, 112) wirkverbunden ist, wobei der Speicher (122) Anweisungen umfasst, die auf diesem gespeichert sind und die, wenn sie vom Prozessor (120) gelesen werden, den Prozessor (120) veranlassen:
Objekte vor dem Luftfahrzeug zu erkennen;
und **dadurch gekennzeichnet, dass** jede aus der ersten und der zweiten Sensoranordnung (102, 112) unabhängige Polarisationskanäle umfasst.

10. Verfahren nach Anspruch 9, weiter umfassend das Rotieren jeder aus der ersten und der zweiten Sensoranordnung um eine Kardanachse, die an dem Luftfahrzeug (110) befestigt ist, so dass das erste und das zweite Sichtfeld überlappen.

11. Verfahren nach Anspruch 9 oder 10, weiter umfassend das Rotieren jeder aus der ersten und der zweiten Sensoranordnung, so dass das erste und das zweite Feld getrennt und unterschiedlich sind.

12. Verfahren nach einem der Ansprüche 9 bis 11, wobei jeder aus dem ersten und dem zweiten LIDAR-Sensor EO-/IR-Bildsensoren umfasst.

13. Verfahren nach einem der Ansprüche 9 bis 12, weiter umfassend das Erkennen von Objekten vor dem Luftfahrzeug (110), um Kollisionen zu vermeiden.

14. Verfahren nach einem der Ansprüche 9 bis 13, weiter umfassend das Identifizieren eines geeigneten Landebereichs.

15. Verfahren nach einem der Ansprüche 9 bis 13, wobei der Speicher (122) Anweisungen umfasst, die auf diesem gespeichert sind und die, wenn sie vom Prozessor (120) gelesen werden, den Prozessor veranlassen:
das Material eines Objektes oder einer Fläche, das oder die von der ersten und der zweiten Sensoranordnung (102, 112) erkannt wurde, basierend auf der Polarisation des reflektierten Lichts, die mit den entsprechenden Polarisationskanälen erkannt wurde, anzugeben.

## Revendications

1. Système de capteurs (100), comprenant :
un premier ensemble capteur (102) comprenant un premier capteur LIDAR ;
un second ensemble capteur (112) comprenant un second capteur LIDAR ayant des capacités de capteur sensiblement redondantes à celles du premier ensemble capteur (102) ; et
un système de commande de vol (109) connecté opérationnellement pour commander les premier et second ensembles capteurs (102, 112) individuellement ;
et comprenant en outre un processeur (120) ayant une mémoire (122) connectée opérationnellement aux premier et second ensembles capteurs (102, 112), dans lequel la mémoire (122) inclut des instructions enregistrées sur celle-ci qui, lorsqu'elles sont lues par le processeur (120), amènent le processeur (120) à :
détecter des objets en face d'un aéronef ; et **caractérisé en ce que** chacun des premier et second ensembles capteurs (102, 112) inclut des canaux de polarisation indépendants.

2. Système de capteurs selon la revendication 1, dans lequel les capteurs (104, 114) de chacun des premier et second capteurs LIDAR contiennent des capteurs d'imagerie EO/IR.

3. Système de capteurs selon la revendication 1 ou 2, dans lequel les premier et second ensembles capteurs (102, 112) sont chacun montés dans un cardan (106, 116) respectif de telle sorte que les premier et second capteurs (104, 114) de chaque ensemble capteur (102, 112) peuvent tourner de degrés variables pour obtenir un champ de vision souhaité.

4. Système de capteurs selon la revendication 3, dans lequel le système de commande de vol (109) est configuré pour diriger les premier et second capteurs (104, 114) vers des champs de vision chevauchants.

5. Système de capteurs selon la revendication 3 ou 4, dans lequel le système de commande de vol (109) est configuré pour diriger les premier et second capteurs (104, 114) vers des champs de vision non chevauchants.

6. Système de capteurs selon une quelconque revendication précédente, dans lequel le système de commande de vol (109) est configuré pour diriger l'un des premier et second ensembles capteurs (102, 112) pour qu'il fonctionnent en continu dans un mode « actif » avec l'autre des premier et second ensembles capteurs (102, 112) basculant sélectivement entre un mode « actif » et un mode « inactif ».

7. Système de capteurs selon la revendication 1, dans lequel la mémoire (122) inclut des instructions enregistrées sur celle-ci qui, lorsqu'elles sont lues par le processeur (120), amènent le processeur à :
identifier une zone d'atterrissage appropriée.

8. Système de capteurs selon l'une quelconque des revendications 1 à 6, dans lequel la mémoire (122) inclut des instructions enregistrées sur celle-ci qui, lorsqu'elles sont lues par le processeur (120), amènent le processeur à :
indiquer une matière d'un objet ou d'une surface détecté(e) par les premier et second ensembles capteurs (102, 112) sur la base de la polarisation de la lumière réfléchissante détectée par les canaux de polarisation respectifs.

9. Procédé de fourniture de double redondance pour un système de commande de vol (109), comprenant :
l'observation d'un premier champ de vision d'un premier ensemble capteur (102) comprenant un premier capteur LIDAR et couplé de manière opérationnelle à un secteur avant d'un aéronef (110) ;
l'observation d'un second champ de vision d'un second ensemble capteur (112) comprenant un second capteur LIDAR et couplé opérationnellement à l'aéronef (110) positionné à une distance du premier ensemble capteur (102), le second ensemble capteur (112) ayant des capacités sensiblement redondantes à celles du premier ensemble capteur (102) ; et
la commande des premier et second ensembles capteurs (102, 112) individuellement avec un système de commande de vol (109) ; et la fourniture d'un processeur (120) ayant une mémoire connectée opérationnellement aux premier et second ensembles capteurs (102, 112), la mémoire (122) incluant des instructions enregistrées sur celle-ci qui, lorsqu'elles sont lues par le processeur (120), amènent le processeur (120) à :
détecter des objets à l'avant de l'aéronef ;
et **caractérisé en ce que** chacun des premier et second ensembles capteurs (102, 112) incluent des canaux de polarisation indépendants.

10. Procédé selon la revendication 9, comprenant en outre la rotation de chacun des premier et second ensembles capteurs sur un axe de cardan monté sur l'aéronef (110) de telle sorte que les premier et second champs de vision se chevauchent.

11. Procédé selon la revendication 9 ou 10, comprenant en outre la rotation de chacun des premier et second ensembles capteurs de telle sorte que les premier et second champs soient séparés et distincts.

12. Procédé selon l'une quelconque des revendications 9 à 11, dans lequel chacun des premier et second capteurs LIDAR contient des capteurs d'imagerie EO/IR.

13. Procédé selon l'une quelconque des revendications 9 à 12, comprenant en outre la détection d'objets en face de l'aéronef (110) pour éviter les collisions.

14. Procédé selon l'une quelconque des revendications 9 à 13, comprenant en outre l'identification d'une zone d'atterrissage appropriée.

15. Procédé selon l'une quelconque des revendications 9 à 13, dans lequel la mémoire (122) inclut des instructions enregistrées sur celle-ci qui, lorsqu'elles sont lues par le processeur (120), amènent le processeur à :
indiquer une matière d'un objet ou d'une surface détecté(e) par les premier et second ensembles capteurs (102, 112) sur la base d'une polarisation de la lumière réfléchissante détectée avec les canaux de polarisation respectifs.
